# FASCICULE DE BREVET EUROPEEN

(11) **EP 3 113 973 B1**
(45) Date de publication et mention de la délivrance du brevet: **29.11.2017**
(21) Numéro de dépôt: 15711261.6
(22) Date de dépôt: 27.02.2015
(51) Int. Cl.: B60N 2/20, B60N 2/22, B60N 2/225, B60N 2/235

(54) **ENSEMBLE D'ARTICULATION DEBRAYABLE POUR SIEGE DE VEHICULE AUTOMOBILE**
ENTKUPPELBARE GELENKANORDNUNG FÜR EINEN KRAFTFAHRZEUGSITZ
DISENGAGEABLE ARTICULATION ASSEMBLY FOR MOTOR VEHICLE SEAT

(30) Priorité: 06.03.2014 FR 1451809
(43) Date de publication de la demande: 11.01.2017
(73) Titulaire: PSA Automobiles SA, 78300 Poissy (FR)
(72) Inventeur: HAYAT, David, 78770 Auteuil (FR); PINTO TEIXEIRA, Frederic, 91160 Ballainvilliers (FR)
(74) Mandataire: Jeannin, Laurent Jean-Pierre
(86) Numéro de dépôt international: PCT/FR2015/050485
(87) Numéro de publication internationale: WO 2015/132516

(56) Documents cités:
- WO-A1-2014/009642
- DE-A1-102011 011 571

## Description

L'invention concerne un ensemble d'articulation débrayable pour siège de véhicule automobile permettant de régler l'inclinaison entre le dossier de siège et l'assise du siège en assurant à la fois un réglage fin de cette inclinaison et en autorisant également l'abaissement rapide du dossier pour permettre l'accès aux places arrières du véhicule.

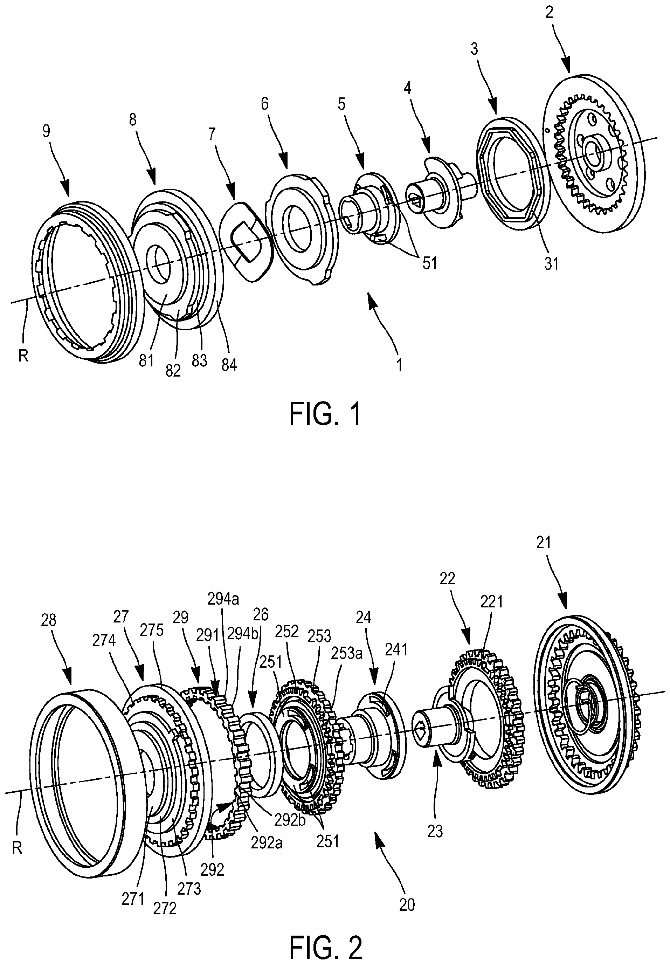

En référence à la figure 1, un ensemble d'articulation 1 de ce type de l'art antérieur comporte un premier flasque 2 articulé en rotation avec un pignon 3 autour d'un axe de rotation principal R ainsi qu'un élément de commande d'entraînement asymétrique 4 qui règle la position relative entre le pignon 3 et le premier flasque 2.

L'ensemble d'articulation 1 comporte également un organe de débrayage 5 relié à des moyens d'actionnement de l'inclinaison du siège non représentés, un disque de débrayage 6, une rondelle ondulée 7 formant ressort en sollicitant le disque de débrayage 6 vers le pignon 3 et un second flasque 8. Une bague annulaire 9 permet de maintenir les éléments de l'ensemble d'articulation 1 précédemment énoncés.

Cet ensemble d'articulation 1 peut adopter une position verrouillée dans laquelle le dossier de siège est rendu immobile relativement à l'assise, et une position déverrouillée dans laquelle l'utilisateur peut faire varier l'inclinaison du siège, fine ou plus importante, avant de replacer l'ensemble en position verrouillée dans la position d'inclinaison choisie.

A cet effet, l'ensemble d'articulation comporte des moyens de coordination en verrouillage dont une partie seulement est visible sur la figure 1. Il s'agit d'une nervure octogonale 31 agencée sur le pignon 3 qui coopère avec une rainure correspondante non visible faite sur le disque de débrayage 6 du côté du pignon 3. La rondelle ondulée 7, en sollicitant le disque de débrayage 6 vers le pignon 3, tend à concourir au maintien de la position verrouillée dans laquelle la nervure 31 est logée dans la rainure du disque de débrayage 6. Pour amener l'ensemble d'articulation 1 dans une position déverrouillée, des moyens de sollicitation en déverrouillage représentés également en partie sur la figure 1 comportent des cames males 51 réalisés sur l'organe de débrayage 5 qui coopèrent avec des empreintes non visibles faites sur le disque de débrayage 6 du côté de l'organe de débrayage 5.

La mise en rotation de l'organe de débrayage 5 et le glissement des cames 51 dans les empreintes provoque la translation axiale du disque de débrayage 6 vers le second flasque 2 à l'opposé de la force de rappel de la rondelle ondulée 7, ainsi que le désengagement de la nervure 31 du pignon 3 de la rainure du disque de débrayage 6.

Le premier 2 et le second 8 flasques peuvent alors pivoter librement l'un par rapport à l'autre ; l'ensemble est ainsi en position déverrouillée. Une fois l'inclinaison du dossier de siège choisie par l'utilisateur, l'ensemble d'articulation se repositionne dans sa position de verrouillage par des moyens non représentés.

Lors du passage de la position verrouillée à la position déverrouillée, la translation axiale du disque de débrayage 6 vers le second flasque 8 s'effectue en réalité par coulissement axial du disque de débrayage 6 dans le second flasque 8. Le second flasque 8 comporte à cet effet une série de paliers annulaires coaxiaux 81, 82, 83, 84 s'étendant axialement depuis un anneau de plus petit diamètre 81 situé à l'opposé du disque de débrayage 6 jusqu'à un anneau de plus grand diamètre 84 situé du côté du disque de débrayage 6.

Il a été décelé une faiblesse dans la tenue du second flasque 8, en particulier lorsque ce dernier est sollicité par le disque de débrayage 6 qui coulisse en passant de la position verrouillée à la position déverrouillée. Cette faiblesse est principalement présente au niveau de l'anneau 83 qui est sollicité par le coulissement du disque de débrayage 6 dans le second flasque 8.

On connait par le document WO 2014/009642 un ensemble d'articulation comprenant un premier élément et un deuxième élément articulés dans un premier mode en rotation l'un par rapport à l'autre autour d'un axe de rotation, un dispositif de commande d'entraînement pour régler la position relative entre le premier élément et le deuxième élément en rotation autour de l'axe de rotation et une bague qui maintient ensemble le premier élément, le deuxième élément et le dispositif de commande d'entraînement de manière à former un module de réglage fin de l'inclinaison du dossier du siège, dans lequel entre le premier élément et la bague de maintien est intercalée une commande de déverrouillage pour assurer un deuxième mode de fonctionnement comprenant un doigt de débrayage guidé en rotation pour séparer le premier élément d'un disque de débrayage, le disque de débrayage étant poussé axialement vers le premier élément grâce à l'action d'un ressort qui prend appui contre une coupelle maintenue par la bague. On connait par le document DE10 2011 011571 un système comportant un raccord présentant une pièce de blocage disposée entre deux pièces de fixation. Un élément de palier monobloc est superposé aux pièces de montage et de blocage. La partie de verrouillage comprend une rampe dont la rampe et le plan partiel sont combinés avec une rampe de l'élément de palier pour déplacer axialement la pièce de blocage. La partie de verrouillage comprend une autre rampe dont la rampe et le plan partiel sont disposés sur un côté opposé de la partie de verrouillage. Un élément de verrouillage est relié à la rampe et au plan partiel de cette dernière région.

Dans ce contexte, la présente invention vise un ensemble d'articulation permettant de pallier les inconvénients précités.

A cet effet, l'ensemble d'articulation débrayable pour siège de véhicule automobile comporte :
- des premier et second flasques coaxialement disposés autour de l'axe de rotation du dit ensemble de débrayage et fixés respectivement à l'assise et au dossier du siège ou inversement,
- un disque de débrayage lié en rotation avec le second flasque, et
- un organe de débrayage actionnable en rotation pour entraîner le disque de débrayage en translation axiale depuis une position verrouillée dans laquelle les premier et second flasques sont solidaires en rotation, jusqu'à une position débrayée dans laquelle les premier et second flasques pivotent librement l'un par rapport à l'autre,
et est essentiellement caractérisé en ce qu'il comporte une bague de renforcement en contact annulaire avec le disque de débrayage et le second flasque, et comprenant des moyens de coulissement axiaux dudit disque de débrayage relativement au dit second flasque lorsque le disque de débrayage (25) passe de la position verrouillée à la position déverrouillée et inversement.

L'ensemble d'articulation de l'invention peut également comporter les caractéristiques optionnelles suivantes considérées isolément ou selon toutes les combinaisons techniques possibles :
- la bague de renforcement comprend une denture externe coopérant avec une denture interne du second flasque, et une denture interne coopérant avec une denture externe du disque de débrayage.
- les dentures externe et interne de la bague de renforcement, ainsi que la denture interne du second flasque qui coopère avec la denture externe de la bague de renforcement, et la denture externe du disque de débrayage qui coopère avec la denture interne de la bague de renforcement comportent une alternance de rainures et de nervure orientées axialement et aptes ainsi à lier en rotation la bague de renforcement, le second flasque et le disque de débrayage tout en laissant libre en coulissement axial le disque de débrayage relativement au second flasque.
- le second flasque comporte une série de paliers annulaires coaxiaux s'étendant axialement depuis un anneau de plus petit diamètre situé à l'opposé du disque de débrayage jusqu'à un anneau de plus grand diamètre qui est situé du côté du disque de débrayage et dont la denture interne coopère avec la denture externe de la bague de renforcement.
- le disque de débrayage comporte une série de paliers annulaires coaxiaux s'étendant axialement depuis un anneau de plus petit diamètre situé du côté du second flasque jusqu'à un anneau de plus grand diamètre qui est situé du côté du premier flasque et dont la denture externe coopère avec la denture interne de la bague de renforcement.
des cames mâles sont ménagés sur l'organe de débrayage pour coopérer avec des empreintes réalisées sur le disque de débrayage, la rotation de l'organe de débrayage relativement au disque de débrayage depuis la position verrouillée jusqu'à la position déverrouillée entraînant le disque de débrayage en translation axiale vers le second flasque.
- l'ensemble comporte un moyen élastique de rappel qui est pris en sandwich entre le disque de débrayage et le second flasque et qui sollicite le disque de débrayage en direction du premier flasque.

L'invention porte également sur un siège de véhicule automobile qui est essentiellement caractérisé en ce qu'il comporte au moins un ensemble d'articulation tel que précédemment énoncé.

Avantageusement, le siège de l'invention comprend deux ensembles d'articulation qui sont de préférence symétriquement disposés de part et d'autre du plan médian dudit siège.

D'autres caractéristiques et avantages de l'invention ressortiront clairement de la description qui en est donnée ci-dessous, à titre indicatif et nullement limitatif, en référence aux figures annexées parmi lesquelles :
- la figure 1 déjà décrite est une représentation schématique en éclatée d'un ensemble d'articulation de l'art antérieur,
- la figure 2 est une représentation schématique en éclatée de l'ensemble d'articulation selon l'invention,
- la figure 3 est une représentation schématique en coupe de l'ensemble d'articulation de l'invention dans la position verrouillée ou embrayée, et
- la figure 4 est une représentation schématique en coupe de l'ensemble d'articulation de l'invention dans la position déverrouillée ou débrayée.

L'ensemble d'articulation 20 de l'invention comporte un grand nombre d'éléments communs avec l'ensemble d'articulation 1 de l'art antérieur décrit en référence à la figure 1.

En référence à la figure 2, l'ensemble d'articulation 20 de l'invention comporte un premier flasque 21 articulé en rotation avec un pignon 22 autour d'un axe de rotation principal R ainsi qu'un élément de commande d'entraînement asymétrique 23 qui règle la position relative entre le pignon 22 et le premier flasque 21. Le pignon 22 comporte une denture extérieure 221 reliée à une denture intérieure 211 du premier flasque 21 en formant l'articulation en rotation entre ces deux pièces.

L'ensemble d'articulation 20 comporte également un organe de débrayage 24 relié à des moyens d'actionnement de l'inclinaison du siège non représentés, un disque de débrayage 25, une rondelle ondulée 26 formant ressort en sollicitant le disque de débrayage 25 vers le pignon 22, et un second flasque 27. Une bague annulaire 28 permet de maintenir les éléments de l'ensemble d'articulation 20 précédemment énoncés.

Cet ensemble d'articulation 20 peut adopter une position verrouillée dans laquelle le dossier de siège est rendu immobile relativement à l'assise, et une position déverrouillée dans laquelle l'utilisateur peut faire varier l'inclinaison du siège avant de replacer l'ensemble en position verrouillée dans la position d'inclinaison choisie.

A cet effet, l'ensemble d'articulation comporte des moyens de coordination en verrouillage non visibles sur cette figure et permettant de faire coopérer par un blocage en rotation le pignon 22 avec le disque de débrayage 25. La rondelle ondulée 26, en sollicitant le disque de débrayage 25 vers le pignon 22, tend à concourir au maintien de la position verrouillée dans laquelle le pignon 22 et le disque de débrayage 25 coopèrent en rotation l'un relativement à l'autre.

Pour amener l'ensemble d'articulation 20 dans une position déverrouillée, des moyens de sollicitation en déverrouillage 241,251 comportent des cames maies 241 réalisés sur l'organe de débrayage 24 qui coopèrent avec des empreintes 251 faites sur le disque de débrayage 25. La mise en rotation de l'organe de débrayage 24 et le glissement des cames 241 sur les empreintes 251 provoque la translation axiale du disque de débrayage 25 vers le second flasque 27 à l'opposé de la force de rappel de la rondelle ondulée 26, ainsi que le désengagement des moyens de coordination en verrouillage rendant libre en pivotement relatif le premier 21 et le second 27 flasques. L'ensemble d'articulation 20 est alors en position déverrouillée.

Selon l'invention, l'ensemble d'articulation 20 comporte une bague de renforcement 29 située entre le second flasque 27 et le disque de débrayage 25, et destinée plus particulièrement à assurer le guidage en coulissement du disque de débrayage 25 dans le second flasque 27 lors du passage de la position verrouillée à la position déverrouillée, et inversement. Plus précisément, la bague de renforcement 29 est en contact annulaire avec le disque de débrayage 25 et le second flasque 27.

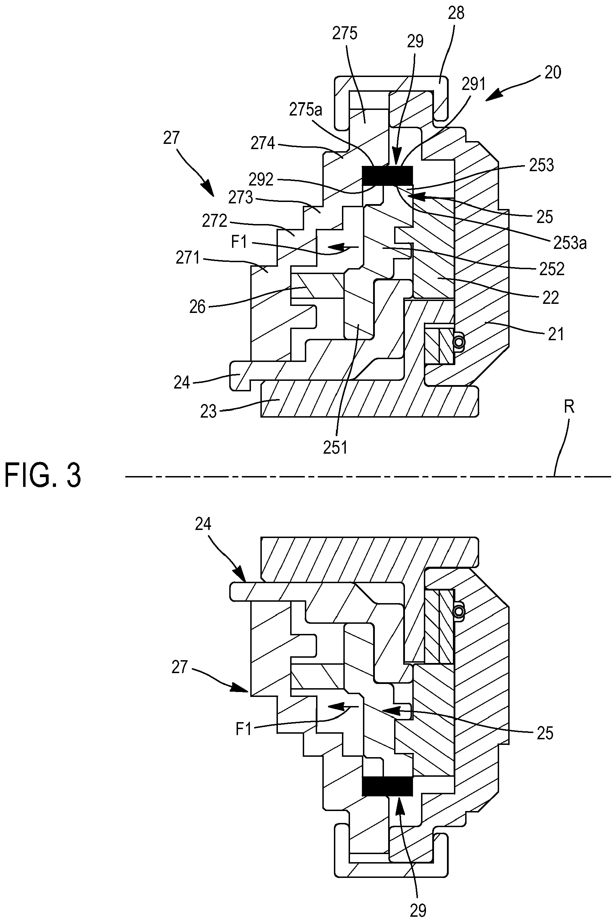

En référence aux figures 2 et 3, le second flasque 27 comporte une série de paliers annulaires coaxiaux 271,272,273,274,275 s'étendant axialement depuis un anneau de plus petit diamètre 271 situé à l'opposé du disque de débrayage 25 jusqu'à un anneau de plus grand diamètre 275 qui est situé du côté du disque de débrayage 25.

De façon similaire, le disque de débrayage 25 comporte une série de paliers annulaires coaxiaux 251,252,253 s'étendant axialement depuis un anneau de plus petit diamètre 251 situé du côté du second flasque 27 jusqu'à un anneau de plus grand diamètre 253 qui est situé du côté du premier flasque 21.

La bague de renforcement 29 comporte une denture externe 291 faite d'une alternance de nervures 291a et de rainures 291b, et une denture interne 292 faite également d'une alternance de nervures 292a et de rainures 292b.

La denture externe 291 de la bague de renforcement 29 coopère avec une denture interne 275a (figure 3) ménagée au niveau de l'anneau de plus grand diamètre 275 du second flasque 27. La denture interne 292 de la bague de renforcement 29 coopère quant à elle avec la denture externe 253a de l'anneau de plus grand diamètre 253 du disque de débrayage 25.

En référence à la figure 3, en position verrouillée ou embrayée, le disque de débrayage 25 et le pignon 221 coopèrent en maintenant le premier flasque 21 et le second flasque 27 en liaison rotative.

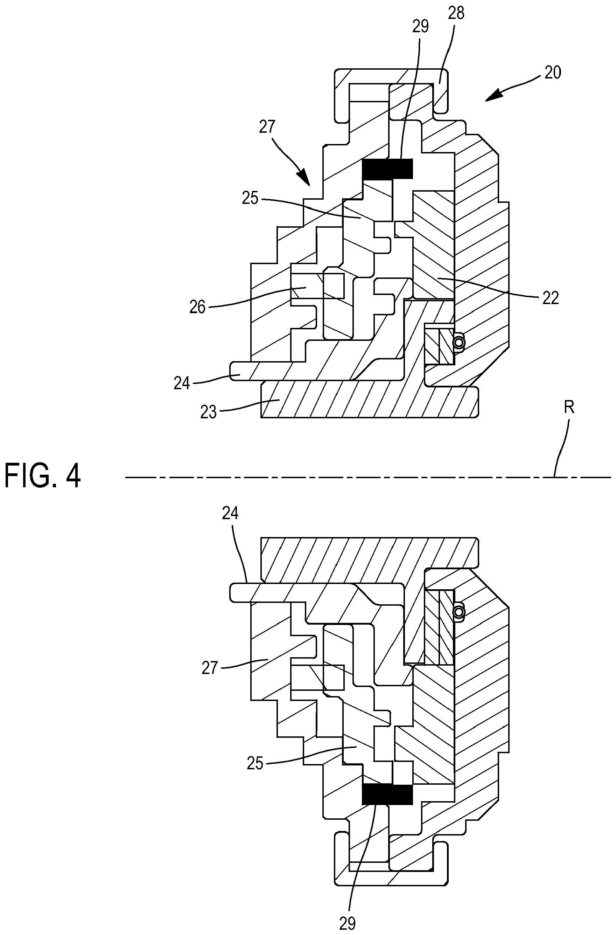

Lors du passage à la position déverrouillée ou débrayé, le disque de débrayage 25 coulisse axialement selon la flèche F1 vers le second flasque 27 sous l'effet de la disjonction des cames et empreintes complémentaires (non visibles sur les figures 3 et 4) respectivement situés sur l'organe de débrayage 24 et sur le disque de débrayage 25.

Le coulissement du disque de débrayage 25 s'effectue ainsi par coulissement de la denture externe 253a de son anneau de plus grand diamètre 253 dans la denture interne 292 de la bague de renforcement 29 pour atteindre la position débrayée représentée sur la figure 4 dans laquelle les premier 21 et second 27 flasques sont libres de rotation l'un par rapport à l'autre pour permettre le réglage du dossier de siège relativement à l'assise.

La présence de la bague de renforcement 29 permet ainsi d'accompagner le coulissement du disque de débrayage 25 dans le second flasque 27 en sollicitant peu le second flasque 27 du fait de la répartition des efforts sur toutes les dentures en jeu, en particulier lors de chocs arrière ou avant sur le véhicule.

Par ailleurs, les dentures externes 292 et internes 291 de la bague de renforcement 29 qui coopèrent respectivement avec la denture interne 275a du second flasque 27 et la denture externe 253a de l'anneau de plus grand diamètre 253 du disque de débrayage 25 permettent de maintenir liés en rotation le disque de débrayage 25 et le second flasque 27, via la bague de renforcement 29.

## Revendications

1. Ensemble d'articulation (20) débrayable pour siège de véhicule automobile comportant :
- des premier (21) et second (27) flasques coaxialement disposés autour de l'axe de rotation du dit ensemble de débrayage et fixés respectivement à l'assise et au dossier du siège ou inversement,
- un disque de débrayage (25) lié en rotation avec le second flasque, et
- un organe de débrayage (24) actionnable en rotation pour entraîner le disque de débrayage en translation axiale depuis une position verrouillée dans laquelle les premier et second flasques sont solidaires en rotation, jusqu'à une position débrayée dans laquelle les premier et second flasques pivotent librement l'un par rapport à l'autre,
**caractérisé en ce qu'**il comporte une bague de renforcement (29) qui est en contact annulaire avec le disque de débrayage (25) et le second flasque (27), et qui comprend des moyens de coulissement axiaux (292,253a) dudit disque de débrayage (25) relativement au dit second flasque (27) lorsque le disque de débrayage (25) passe de la position verrouillée à la position déverrouillée et inversement.

2. Ensemble d'articulation selon la revendication 1, **caractérisé en ce que** la bague de renforcement (29) comprend une denture externe (291) coopérant avec une denture interne (275a) du second flasque (27), et une denture interne (292) coopérant avec une denture externe (253a) du disque de débrayage (25).

3. Ensemble d'articulation selon la revendication 2, **caractérisé en ce que** les dentures externe (291) et interne (292) de la bague de renforcement (29), ainsi que la denture interne (275a) du second flasque (27) qui coopère avec la denture externe (291) de la bague de renforcement (29), et la denture externe (253a) du disque de débrayage (25) qui coopère avec la denture interne (292) de la bague de renforcement (29) comportent une alternance de rainures (291a,292a) et de nervure (291b,292b) orientées axialement et aptes ainsi à lier en rotation la bague de renforcement (29), le second flasque (27) et le disque de débrayage (25) tout en laissant libre en coulissement axial le disque de débrayage (25) relativement au second flasque (27).

4. Ensemble d'articulation selon l'une quelconque des revendications 2 et 3, **caractérisé en ce que** le second flasque (27) comporte une série de paliers annulaires coaxiaux (271,272,273,274,275) s'étendant axialement depuis un anneau de plus petit diamètre (271) situé à l'opposé du disque de débrayage (25) jusqu'à un anneau de plus grand diamètre (275) qui est situé du côté du disque de débrayage (25) et dont la denture interne (275a) coopère avec la denture externe (291) de la bague de renforcement (29).

5. Ensemble d'articulation selon l'une quelconque des revendications 2 à 4, **caractérisé en ce que** le disque de débrayage (25) comporte une série de paliers annulaires coaxiaux (251,252,253) s'étendant axialement depuis un anneau de plus petit diamètre (251) situé du côté du second flasque (27) jusqu'à un anneau de plus grand diamètre (253) qui est situé du côté du premier flasque (21) et dont la denture externe (253a) coopère avec la denture interne (292) de la bague de renforcement (29).

6. Ensemble d'articulation selon l'une quelconque des revendications 1 à 5, **caractérisé en ce que** des cames mâles (241) sont ménagés sur l'organe de débrayage (24) pour coopérer avec des empreintes (251) réalisées sur le disque de débrayage (25), la rotation de l'organe de débrayage (24) relativement au disque de débrayage (25) depuis la position verrouillée jusqu'à la position déverrouillée entraînant le disque de débrayage (25) en translation axiale vers le second flasque (27).

7. Ensemble d'articulation selon l'une quelconque des revendications précédentes, **caractérisé en ce qu'**il comporte un moyen élastique de rappel (26) qui est pris en sandwich entre le disque de débrayage (25) et le second flasque (27) et qui sollicite le disque de débrayage (25) en direction du premier flasque (21).

8. Siège de véhicule automobile, **caractérisé en ce qu'**il comporte au moins un ensemble d'articulation selon l'une quelconque des revendications 1 à 7.

9. Siège selon la revendication 8, **caractérisé en ce qu'**il comprend deux ensembles d'articulation selon l'une quelconque des revendications 1 à 7 qui sont symétriquement disposés de part et d'autre du plan médian dudit siège.

## Patentansprüche

1. Entkuppelbare Gelenkanordnung (20) für Kraftfahrzeugsitz, umfassend:
- einen ersten (21) und einen zweiten (27) Flansch, die koaxial um die Rotationsachse der Entkupplungsanordnung angeordnet und jeweils an der Sitzfläche und an der Rückenlehne oder umgekehrt befestigt sind,
- eine Entkuppelscheibe (25), die in Drehung mit dem zweiten Flansch verbunden ist, und
- ein Entkuppelorgan (24), das in Drehung betätigbar ist, um die Entkuppelscheibe in axialer Verschiebung von einer verriegelten Position, in der der erste und der zweite Flansch in Drehung fest verbunden sind, bis zu einer entkuppelten Position, in der der erste und der zweite Flansch frei zueinander schwenken, anzutreiben,
**dadurch gekennzeichnet, dass** sie einen Verstärkungsring (29) umfasst, der in Winkelberührung mit der Entkuppelscheibe (25) und dem zweiten Flansch (27) ist, und der axiale Gleitmittel (292, 253a) der Entkuppelscheibe (25) in Bezug zu dem zweiten Flansch (27) umfasst, wenn die Entkuppelscheibe (25) von der verriegelten Position zu der entriegelten Position und umgekehrt übergeht.

2. Gelenkanordnung nach Anspruch 1, **dadurch gekennzeichnet, dass** der Verstärkungsring (29) eine Außenverzahnung (291) umfasst, die mit einer Innenverzahnung (275a) des zweiten Flanschs (27) zusammenwirkt, und eine Innenverzahnung (292), die mit einer Außenverzahnung (253a) der Entkuppelscheibe (25) zusammenwirkt.

3. Gelenkanordnung nach Anspruch 2, **dadurch gekennzeichnet, dass** die Außenverzahnung (291) und die Innenverzahnung (292) des Verstärkungsrings (29) sowie die Innenverzahnung (275a) des zweiten Flanschs (27), die mit der Außenverzahnung (291) des Verstärkungsrings (29) zusammenwirkt, und die Außenverzahnung (253a) der Entkuppelscheibe (25), die mit der Innenverzahnung (292) des Verstärkungsrings (29) zusammenwirkt, einen Wechsel von Nuten (291a, 292a) und Rippen (291b, 292b) umfassen, die axial ausgerichtet und daher geeignet sind, die Verstärkungsrippen (29), den zweiten Flansch (27) und die Entkuppelscheibe (25) in Drehung zu verbinden, während die Entkuppelscheibe (25) in Bezug zu dem zweiten Flansch (27) zum axialen Gleiten frei bleibt.

4. Gelenkanordnung nach einem der Ansprüche 2 und 3, **dadurch gekennzeichnet, dass** der zweite Flansch (27) eine Reihe koaxialer ringförmiger Lager (271, 272, 273, 274, 275) umfasst, die sich axial ausgehend von einem Ring mit dem kleinsten Durchmesser (271), der zu der Entkuppelscheibe (25) entgegengesetzt liegt, bis zu einem Ring mit größtem Durchmesser (275), der auf der Seite der Entkuppelscheibe (25) liegt und dessen Innenverzahnung (275a) mit der Außenverzahnung (291) des Verstärkungsrings (29) zusammenwirkt, erstrecken.

5. Gelenkanordnung nach einem der Ansprüche 2 bis 4, **dadurch gekennzeichnet, dass** die Entkuppelscheibe (25) eine Reihe koaxialer ringförmiger Lager (251, 252, 253) umfasst, die sich axial von einem Ring mit kleinstem Durchmesser (251), der auf der Seite des zweiten Flanschs (27) liegt, bis zu einem Ring mit größtem Durchmesser (253), der auf der Seite des ersten Flansch (21) liegt und dessen Außenverzahnung (253a) mit der Innenverzahnung (292) des Verstärkungsrings (29) zusammenwirkt, erstrecken.

6. Gelenkanordnung nach einem der Ansprüche 1 bis 5, **dadurch gekennzeichnet, dass** Stecknocken (241) auf dem Entkuppelorgan (24) eingerichtet sind, um mit Abdrücken (251), die auf der Entkuppelscheibe (25) hergestellt sind, zusammenzuwirken, wobei die Drehung des Entkuppelorgans (24) in Bezug zu der Entkuppelscheibe (25) von der verriegelten Position bis zu der entriegelten Position die Entkuppelscheibe (25) in axialer Verschiebung zu dem zweiten Flansch (27) antreibt.

7. Gelenkanordnung nach einem der vorhergehenden Ansprüche, **dadurch gekennzeichnet, dass** sie ein elastisches Rückstellelement (26) umfasst, das zwischen der Entkuppelscheibe (25) und dem zweiten Flansch (27) ins Sandwich genommen ist und die Entkuppelscheibe (25) in Richtung des ersten Flansch (21) beansprucht.

8. Kraftfahrzeugsitz, **dadurch gekennzeichnet, dass** er mindestens eine Gelenkanordnung nach einem der Ansprüche 1 bis 7 umfasst.

9. Sitz nach Anspruch 8, **dadurch gekennzeichnet, dass** er zwei Gelenksanordnungen nach einem der Ansprüche 1 bis 7 umfasst, die symmetrisch zu beiden Seiten der Mittenebene des Sitzes angeordnet sind.

## Claims

1. A disengageable articulation assembly (20) for a motor vehicle seat, comprising:
- first (21) and second (27) flanges disposed coaxially about the rotation axis of said disengagement assembly and secured respectively to the seat and to the backrest of the seat, or vice versa,
- a disengagement disc (25) linked in rotation to the second flange, and
- a disengagement member (24) that can be actuated in rotation in order to drive the disengagement disc in axial translation from a locked position in which the first and second flanges are non-rotatably connected, to a disengaged position, in which the first and second flanges pivot freely with respect to one another,
**characterized in that** it comprises a reinforcing ring (29) which is in annular contact with the disengagement disc (25) and the second flange (27), and which includes means (292, 253a) for the axial sliding of said disengagement disc (25) relative to said second flange (27) when the disengagement disc (25) passes from the locked position to the unlocked position and vice versa.

2. The articulation assembly according to claim 1, **characterized in that** the reinforcement ring (29) includes an external toothing (291) cooperating with an internal toothing (275a) of the second flange (27), and an internal toothing (292) cooperating with an external toothing (253a) of the disengagement disc (25) .

3. The articulation assembly according to claim 2, **characterized in that** the external (291) and internal (292) toothings of the reinforcing ring (29), and also the internal toothing (275a) of the second flange (27), which cooperates with the external toothing (291) of the reinforcing ring (29), and the external toothing (253a) of the disengagement disc (25), which cooperates with the internal toothing (292) of the reinforcing ring (29) comprise an alternation of grooves (291a, 292a) and rib (291b, 292b), which are oriented axially and thus capable of linking in rotation the reinforcing ring (29), the second flange (27) and the disengagement disc (25), whilst leaving free in axial sliding the disengagement disc (25) relative to the second flange (27).

4. The articulation assembly according to any one of claims 2 and 3, **characterized in that** the second flange (27) comprises a series of coaxial annular bearings (271, 272, 273, 274, 275) extending axially from a ring of smaller diameter (271) situated opposite the disengagement disc (25) to a ring of greater diameter (275) which is situated on the side of the disengagement disc (25) and the internal toothing (275a) of which cooperates with the external toothing (291) of the reinforcing ring (29).

5. The articulation assembly according to any one of claims 2 to 4, **characterized in that** the disengagement disc (25) comprises a series of coaxial annular bearings (251, 252, 253) extending axially from a ring of smaller diameter (251) situated on the side of the second flange (27) to a ring of greater diameter (253) which is situated on the side of the first flange (21) and the external toothing (253a) of which cooperates with the internal toothing (292) of the reinforcing ring (29).

6. The articulation assembly according to any one of claims 1 to 5, **characterized in that** male cams (241) are arranged on the disengagement member (24) to cooperate with indentations (251) formed on the disengagement disc (25), the rotation of the disengagement member (24) relative to the disengagement disc (25) from the locked position to the unlocked position driving the disengagement disc (25) in axial translation towards the second flange (27) .

7. The articulation assembly according to one of the preceding claims, **characterized in that** it comprises an elastic return means (26) which is sandwiched between the disengagement disc (25) and the second flange (27) and which urges the disengagement disc (25) in the direction of the first flange (21).

8. A motor vehicle seat, **characterized in that** it comprises at least one articulation assembly according to any one of claims 1 to 7.

9. The seat according to claim 8, **characterized in that** it includes two articulation assemblies according to any one of claims 1 to 7, which are symmetrically disposed on either side of the median plane of said seat.
